# EUROPÄISCHE PATENTSCHRIFT

(11) **EP 2 460 744 B1**
(45) Veröffentlichungstag und Bekanntmachung des Hinweises auf die Patenterteilung: **27.03.2013**
(21) Anmeldenummer: 11450121.6
(22) Anmeldetag: 15.09.2011
(51) Int. Cl.: B65G 21/04, B65G 21/22

(54) **Förderanlage zum Transport von Schüttgütern**
Transport assembly for transporting bulk goods
Installation de transport pour transporter des produits en vrac

(30) Priorität: 02.12.2010 AT 20042010
(43) Veröffentlichungstag der Anmeldung: 06.06.2012
(73) Patentinhaber: Innova Patent GmbH, 6960 Wolfurt (AT)
(72) Erfinder: Trieb, Herbert, 6911 Lochau (AT)
(74) Vertreter: Hehenberger, Reinhard

(56) Entgegenhaltungen:
- EP-A1- 0 949 163
- EP-A2- 2 030 919
- US-A- 5 682 977

## Beschreibung

Die gegenständliche Erfindung betrifft eine Förderanlage zum Transport von Schüttgütern mit drei Paaren von jeweils angenähert vertikal übereinander befindlichen Tragseilen und mit einem in sich geschlossenen Förderband, welches längs der Tragseile von einer Ladestation zu einer Entladestation bewegbar ist und in den Endstationen über Umlenktrommeln geführt ist, wobei das Förderband mit voneinander im Abstand befindlichen und quer zu dessen Längserstreckung ausgerichteten Tragbalken ausgebildet ist, an deren Enden Laufrollen gelagert sind, welche längs der mittleren und der unteren Tragseile abrollen, sowie mit in Längsrichtung der Förderanlage voneinander im Abstand befindlichen Tragrahmen, mittels welcher die Tragseile miteinander verbunden sind, wobei die Tragrahmen durch mindestens zwei zumindest angenähert vertikal ausgerichtete Tragstreben und mindestens zwei zumindest angenähert horizontal ausgerichtete obere und untere Verbindungsstreben gebildet sind und weiters die oberen Enden der Tragstreben mit jeweils einem der beiden oberen Tragseile sowie die Verbindungsstreben mit den mittleren und den unteren Tragseilen verbunden sind.

Derartige Förderanlagen, welche z.B. aus der EP 1295817 B1 und der EP 1452466 B1 bekannt sind, dienen zur Förderung von Schüttgütern, wie Abraummaterialien, Erzen, Kohle u.dgl. von einer Ladestation zu einer Entladestation. Diese Förderanlagen weisen Tragseile auf, längs welcher ein in sich geschlossenes Förderband bewegbar ist. Hierfür sind an der Oberseite des Förderbandes quer zu diesem ausgerichtete Tragbalken befestigt, an deren beiden Enden Laufrollen gelagert sind, mittels welcher das Förderband längs zweier vertikal übereinander angeordneter Paare von Tragseilen bewegt wird. In den Endstationen ist das Förderband über Umlenktrommeln geführt. Oberhalb der beiden Paare von Tragseilen ist ein weiteres Paar von Tragseilen vorgesehen. Weiters sind in Längsrichtung der Förderanlage im Abstand voneinander Tragrahmen vorgesehen, welche dazu dienen, die Tragseile miteinander zu einer stabilen Einheit zu verbinden.
Dasjenige Trum des Förderbandes, welches längs des mittleren Paares der Tragseile bewegt wird, dient zur Förderung von Schüttgütern von einer Ladestation zu einer Entladestation. Längs des Paares der beiden unteren Tragseile wird das untere Trum des Förderbandes von der Entladestation zur Ladestation zurückbewegt. Das obere Paar der Tragseile dient zur Stabilisierung der Förderanlage.

Die Tragrahmen sind durch zwei vertikal ausgerichtete Tragstreben und durch zwei mit den vertikalen Tragstreben verbundene, horizontal ausgerichtete Verbindungsstreben gebildet. Die oberen Enden der vertikal ausgerichteten Tragstreben sind mit den beiden oberen Tragseilen fest verbunden und die zwei horizontal ausgerichteten Verbindungsstreben sind mit den mittleren und den unteren Tragseilen fest verbunden. Dabei stellen die Tragrahmen innerhalb der Förderanlage, in welcher sowohl die Tragseile als auch das Förderband elastisch sind, starre Bauteile dar.

Beim Betrieb derartiger Förderanlagen treten in den Tragrahmen aufgrund der Bewegung des Förderbandes, welches über seine Länge mit unterschiedlichen Mengen von Schüttgütern beladen ist, aufgrund der hierdurch wechselnden Belastungen hohe und wechselnde Spannkräfte auf, weswegen das Erfordernis besteht, die Tragrahmen mit entsprechenden Festigkeiten bzw. Dimensionen auszubilden. Hierdurch werden jedoch einerseits ein großer Materialaufwand und andererseits hohe Belastungen der Tragseile verursacht.

Aus der EP 2030919 A2 ist weiters eine Förderanlage bekannt, welche mit oberen Tragrahmen, welche mit zwei oberen Paaren von Tragseilen fest verbunden sind, und innerhalb welcher das obere Trum des Förderbandes bewegt wird, sowie mit unteren Tragrahmen, welche mit dem unteren Paar der Tragseile fest verbunden sind und in welchen das untere Trum des Förderbandes bewegt wird, ausgebildet sind, wobei die unteren Tragrahmen von den oberen Tragrahmen mittels Zugelementen, wie Ketten oder Seilen, getragen sind.

Diese bekannte Förderanlage ist jedoch gegenüber solchen Förderanlagen, bei welchen die Tragrahmen für das obere Trum des Förderbandes und für das untere Trum des Förderbandes einstückig sind, deshalb nachteilig, da durch die Zugelemente keine Lagestabilisierung der unteren Tragrahmen erfolgt und da durch die Zugelemente keine vom unteren Paar der Tragseile aufgebrachten Stützkräfte übertragen werden. Aus diesen Gründen werden bei derartigen Förderanlagen solche Tragrahmen vorgesehen, durch welche die oberen Tragseile und die unteren Tragseile miteinander stabil verbunden sind.

Der gegenständlichen Erfindung liegt somit die Aufgabe zugrunde, die Ausbildung der die Tragseile miteinander stabil verbindenden Tragrahmen dahingehend zu verbessern, dass bei gleich bleibender Leistungsfähigkeit und Lagestabilität der Förderanlage der für die Tragrahmen erforderliche Materialaufwand und somit deren Gewicht vermindert werden kann. Dies wird erfindungsgemäß dadurch erzielt, dass die Tragstreben durch zwei um zumindest angenähert horizontale und quer zu den Tragseilen ausgerichtete Achsen gegeneinander verschwenkbare Tragstrebenteile gebildet sind, wobei die oberen Tragstrebenteile an den oberen Tragseilen um eine zumindest angenähert horizontale und quer zu den Tragseilen ausgerichtete Achse verschwenkbar sind und dass die untere Verbindungsstrebe an den unteren Enden der unteren Tragstrebenteile verdrehbar gelagert ist.

Gemäß einer bevorzugten Ausführungsform ist zur Verbindung der Tragstreben mit den oberen Tragseilen eine Tragleiste vorgesehen, an welcher das jeweils obere Ende der oberen Tragstrebenteile um eine quer zu den Tragseilen ausgerichtete Achse verschwenkbar gelagert ist und welche mit dem zugeordneten Tragseil, vorzugsweise mittels mindestens eines Bügels, fest verbunden ist. Weiters sind vorzugsweise die oberen Tragstrebenteile an ihren unteren Enden jeweils mit einer Nabe ausgebildet, in welchen die obere Verbindungsstrebe verdrehbar gelagert ist und sind unterhalb dieser Nabe die unteren Tragstrebenteile an die oberen Tragstrebenteile angelenkt. Zudem sind vorzugsweise auch die unteren Tragstrebenteile an ihren unteren Enden mit jeweils einer Nabe ausgebildet, in welchen die untere Verbindungsstrebe verdrehbar gelagert ist. Weiters sind vorzugsweise die beiden Verbindungsstreben anliegend an das jeweils zugeordnete Tragseil mit jeweils einer Klemme zur festen Verbindung des Tragrahmens mit dem jeweils zugeordneten Tragseil ausgebildet.

Der Gegenstand der Erfindung ist nachstehend anhand eines in der Zeichnung dargestellten Ausführungsbeispiels näher erläutert. Es zeigen:
- FIG.1: einen Teil einer erfindungsgemäßen Förderanlage für Schüttgüter, in axonometrischer Darstellung,
- FIG.2: einen Teil der in FIG. 1 dargestellten Förderanlage, in gegenüber FIG.1 vergrößertem Maßstab,
- FIG.3, FIG.3a, FIG.3b und FIG.3c: den in FIG.2 dargestellten Teil der Förderanlage, in Seitenansicht sowie in unterschiedlichen Betriebsstellungen

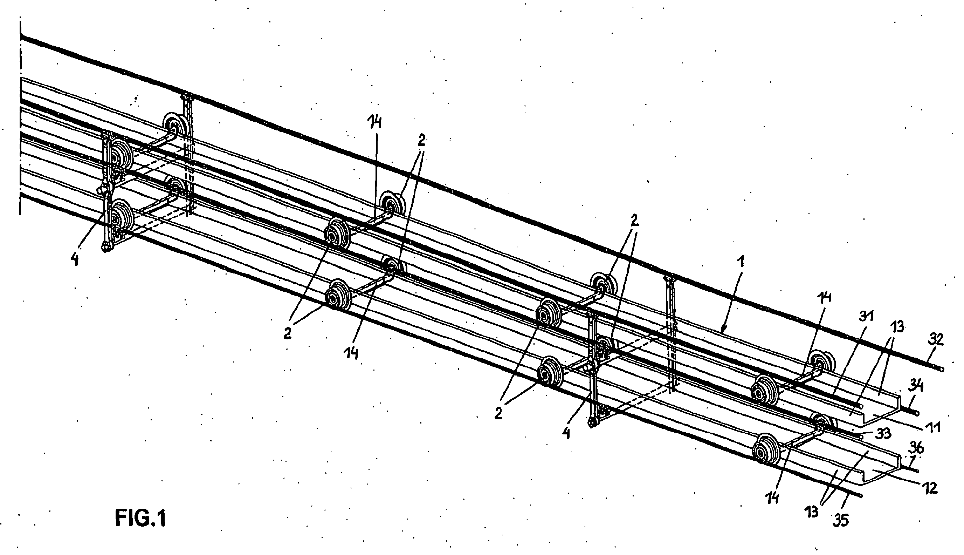

In FIG.1 ist ein Abschnitt einer Förderanlage für Schüttgüter, wie Abraummaterialien, Erze, Kohle u.dgl. dargestellt. Diese Förderanlage besteht aus einem in sich geschlossenen Förderband 1, welches sich von einer Ladestation zu einer Entladestation erstreckt und welches in den beiden Endstationen über Umlenktrommeln geführt ist. Das obere Trum 11 des Förderbandes 1 dient zur Förderung der Schüttgüter von der Ladestation zur Entladestation. In Bewegungsrichtung des Förderbandes 1 nach der Entladestation und weiters vor der Ladestation befinden sich Wendeeinrichtungen, durch welche das von der Entladestation zur Ladestation zurück bewegte untere Trum 12 des Förderbandes 1 so gewendet wird, dass sich auch bei dem zur Ladestation zurück bewegten unteren Trum 12 des Förderbandes 1 die Ladefläche an dessen Oberseite befindet, wobei das untere Trum 12 vor der Ladestation wieder zurück gewendet wird und in dieser Lage um die in der Ladestation befindliche Umnlenktrommel geführt wird.

Das Förderband 1 ist an seinen beiden Seitenrändern mit von seiner Oberseite nach oben abragenden seitlichen, elastisch verformbaren Leisten, sog. Wellkanten 13, ausgebildet. Weiters ist das Förderband 1 an seiner Oberseite mit quer zu dessen Bewegungsrichtung ausgerichteten Tragbalken 14 ausgebildet, an deren freien Enden Laufrollen 2 gelagert sind. Die Förderanlage weist weiters drei Paare von übereinander angeordneten Tragseilen 31, 32, 33, 34, 35, 36 auf, welche miteinander mittels Tragrahmen 4 verbunden sind, wodurch die gesamte Förderanlage stabilisiert ist. Die Laufrollen 2 sind längs der mittleren und unteren Tragseile 33 bis 36 geführt, wodurch das Förderband 1 längs der Tragseile 33 bis 36 bewegbar ist, wodurch die Schüttgüter von der Ladestation zur Entladestation gefördert werden.

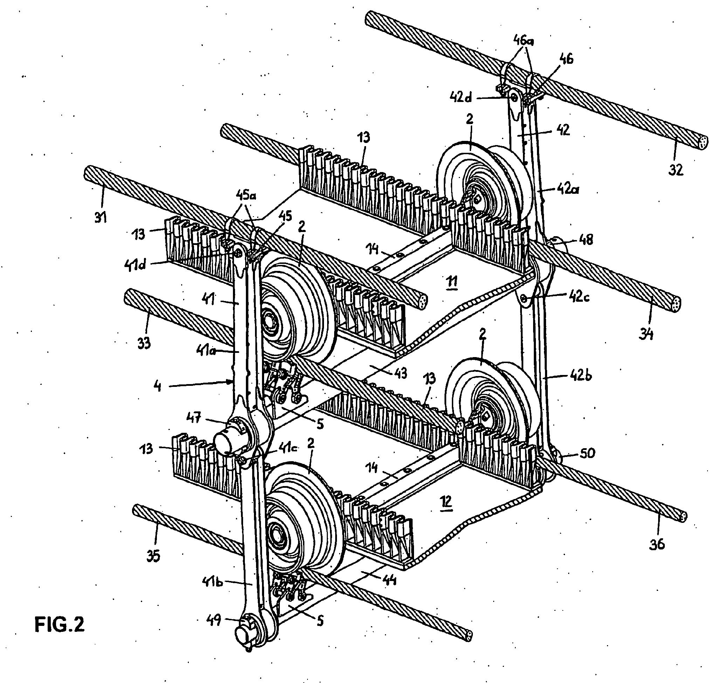

In FIG.2 sind gleichfalls die oberen Tragseile 31 und 32, die mittleren Tragseile 33 und 34 sowie die unteren Tragseile 35 und 36 dargestellt. Längs der mittleren Tragseile 33 und 34 wird mittels der Laufrollen 2 das obere Trum 11 des Förderbandes 1 von der Ladestation zur Entladestation bewegt. Längs der unteren Tragseile 35 und 36 wird das untere Trum 12 des Förderbandes 1 in seiner gewendeten Lage von der Entladestation zur Ladestation zurück bewegt. An den seitlichen Rändern des Förderbandes 1 ragen von diesem die angenähert vertikal nach oben gerichteten Wellkanten 13 ab, welche dehnbar sind, wodurch das Förderband 1 in den Stationen über die dort befindlichen Umlenktrommeln geführt werden kann. An der Oberseite des Förderbandes 1 befinden sich die Tragbalken 14, an deren Enden die Laufrollen 2 gelagert sind, welche längs der Tragseile 33 und 34 bzw. 35 und 36 abrollen.

Wie dies weiters aus FIG.2 ersichtlich ist, sind die Tragrahmen 4 durch zwei vertikale Tragstreben 41 und 42 sowie durch zwei horizontale Verbindungsstreben 43 und 44 gebildet. Dabei bestehen die Tragstreben 41 und 42 jeweils aus zwei Tragstrebenteilen 41a und 41b bzw. 42a und 42b, welche mittels jeweils eines Gelenkbolzens 41c und 42c miteinander gelenkig verbunden sind. Diese beiden Gelenkbolzen 41c und 42c sind angenähert horizontal und quer zu den Tragseilen 31 bis 36 ausgerichtet. Weiters sind die oberen Enden der Tragstrebenteile 41a und 42a mittels Gelenkbolzen 41d und 42d an Tragleisten 45 und 46, welche mittels Bügel 45a und 46a an den oberen Tragseilen 31 und 32 befestigt sind, gleichfalls um angenähert horizontale und quer zu den Tragseilen 31 bis 36 ausgerichtete Achsen verschwenkbar gelagert.

Zudem sind die jeweils oberen Tragstrebenteile 41a und 42a in ihrem unteren Bereich mit Naben 47 und 48 ausgebildet, in welche die als zylindrische Rohrstücke ausgebildete Verbindungsstrebe 43 einragt und in diesen verdrehbar gelagert ist. In gleicher Weise sind die unteren Tragstrebenteile 41b und 42b an ihren unteren Enden mit Naben 49 und 50 ausgebildet, in welche die als zylindrisches Rohrstück ausgebildete untere Verbindungsstrebe 44 einragt und in diesen verdrehbar gelagert ist.

Die Verbindungsstreben 43 und 44 sind an ihren seitlichen Enden mit Klemmen 5 ausgebildet, mittels welcher sie mit den mittleren Tragseilen 33 und 34 sowie mit den unteren Tragseilen 35 und 36 fest verbunden sind.

Durch die gelenkige Lagerung der einzelnen Bestandteile der Tragrahmen 4 können sich diese in ihrer Lage den durch den Betrieb der Förderanlage auftretenden wechselnden Belastungen anpassen, wodurch die in diesen auftretenden Spannungen stark vermindert werden.

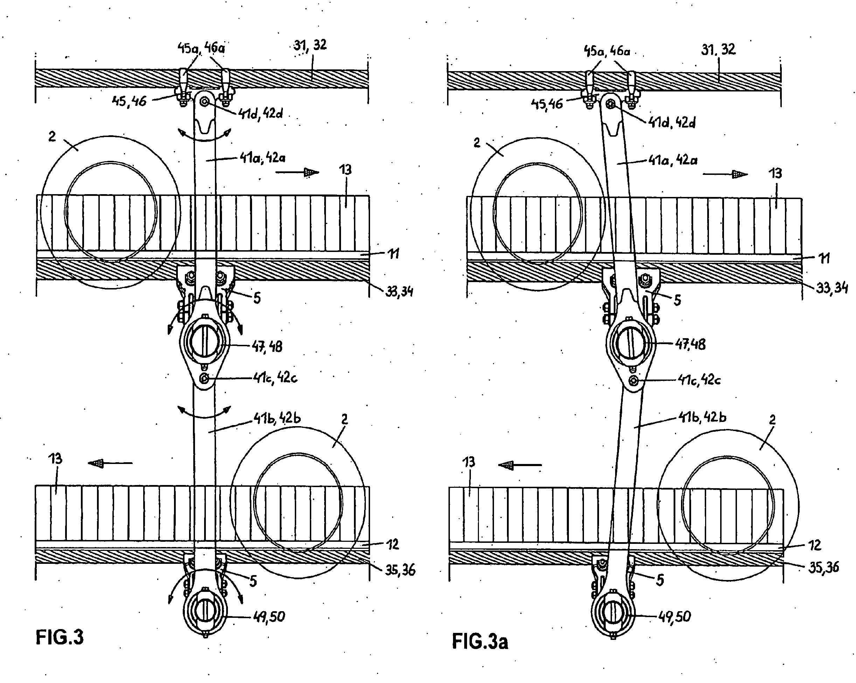

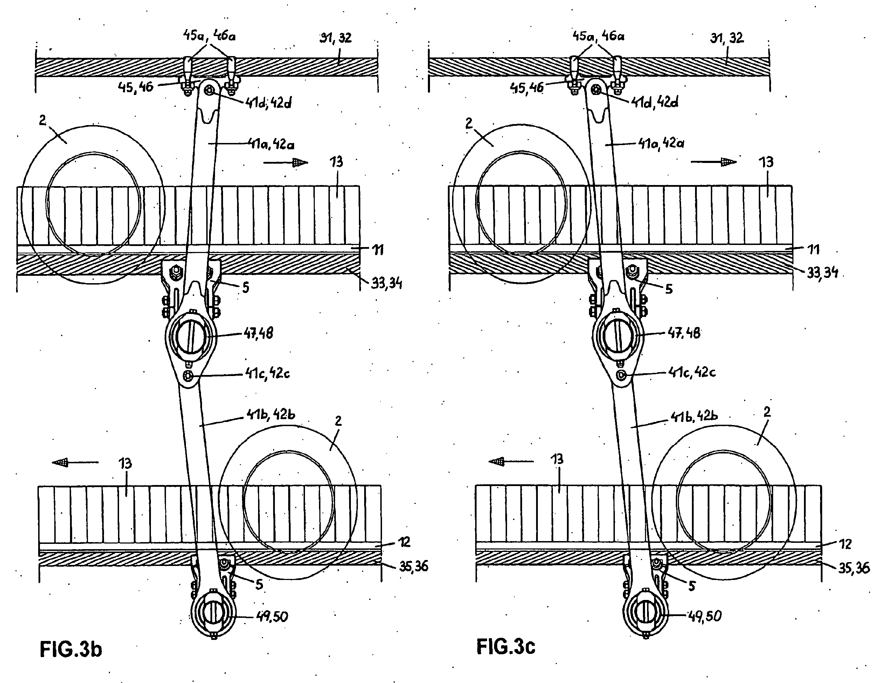

In FIG.3 sind diejenigen Lagen der einzelnen Bestandteile der Tragrahmen 4 dargestellt, welche dann auftreten, wenn das Förderband 1 gleichmäßig beladen ist. Sofern jedoch das obere Trum 11 des Förderbandes 1 über seine Länge ungleichmäßig mit Schüttgütern beladen ist, ändern die Tragseile 33 bis 36 bei der Bewegung des Förderbandes 1 ihre Lagen, wodurch in den Tragrahmen 4 ständig wechselnde Belastungen auftreten. Durch die gelenkigen Verbindungen der Tragrahmen 4 mit den Tragseilen 31 und 32 einerseits und die gelenkigen Verbindungen der Tragstrebenteile 41a und 41b bzw. 42a und 42b miteinander sowie der Verbindungsstreben 43 und 44 mit den Tragstreben 41 und 42 andererseits nehmen die einzelnen Bestandteile der Tragrahmen 4 diejenigen Lagen ein, welche den sich ändernden Belastungen angepasst sind, wodurch die in den Tragrahmen 4 auftreten Spannungen stark vermindert werden.

Entsprechend geänderten Lagen der einzelnen Bestandteile der Tragrahmen 4 sind in den FIG.3a, FIG.3b und FIG.3c dargestellt. Es wird hierzu darauf verwiesen, dass die Winkellagen überhöht dargestellt sind, um die Funktion der gelenkigen Verbindungen zu verdeutlichen.

## Patentansprüche

1. Förderanlage zum Transport von Schüttgütern mit drei Paaren von jeweils angenähert vertikal übereinander befindlichen Tragseilen (31 bis 36) und mit einem in sich geschlossenen förderband (1), welches längs der Tragseile (31 bis 36) von einer Ladestation zu einer Entladestation bewegbar ist und in den Endstationen über Umlenktrommeln geführt ist, wobei das Förderband (1) mit voneinander im Abstand befindlichen und quer zu dessen Längserstreckung ausgerichteten Tragbalken (14) ausgebildet ist, an deren Enden Laufrollen (2) gelagert sind, welche längs der mittleren und der unteren Tragseile (33 bis 36) abrollen, sowie mit in Längsrichtung der Förderanlage voneinander im Abstand befindlichen Tragrahmen (4), mittels welcher die Tragseile (31 bis 36) miteinander verbunden sind, wobei die Tragrahmen (4) durch mindestens zwei zumindest angenähert vertikal ausgerichtete Tragstreben (41, 42) und mindestens zwei zumindest angenähert horizontal ausgerichtete obere und untere Verbindungsstreben (43, 44) gebildet sind und weiters die oberen Enden der Tragstreben (41, 42) jeweils mit einem der beiden oberen Tragseile (31, 32) sowie die Verbindungsstreben (43, 44) mit den mittleren und den unteren Tragseilen (33 bis 36) verbunden sind, **dadurch gekennzeichnet, dass** die Tragstreben (43, 42) durch zwei um zumindest angenähert horizontale und quer zu den Tragseilen (31 bis 36) ausgerichtete Achsen (41c, 42c) gegeneinander verschwenkbare Tragstrebenteile (41a, 41b, 42a, 42b) gebildet sind, wobei die oberen Tragstrebenteile (41a, 42a) an den oberen Tragseilen (31, 32) um eine zumindest angenähert horizontale und quer zu den Tragseilen (31, 32) ausgerichtete Achse (41d, 42d) verschwenkbar sind und dass die untere Verbindungsstrebe (44) an den unteren Enden der unteren Tragstrebenteile (41b, 42b) verdrehbar gelagert ist.

2. Förderanlage nach Patentanspruch 1, **dadurch gekennzeichnet, dass** mindestens eine der beiden. Verbindungsstreben (43, 44) an den beiden Tragstreben (41,42) um eine zumindest angenähert horizontale und quer zu den Tragseilen (31, 32) ausgerichtete Achse (47, 48) verdrehbar gelagert ist.

3. Förderanlage nach einem der Patentanspruch 1 und 2, **dadurch gekennzeichnet, dass** für die Verbindung der Tragstreben (41, 42) an den oberen Tragseilen (31,32) eine Tragleiste (45, 46) vorgesehen ist, an welcher das jeweils obere Ende der Tragstreben (41,42) verschwenkbar gelagert ist und welche mit dem zugeordneten Tragseil (31, 32), vorzugweise mittels mindestens eines Bügels (45a, 46a), fest verbunden ist.

4. Förderanlage nach einem der Patentansprüche 1 bis 3, **dadurch gekennzeichnet, dass** die oberen Tragstrebenteile (41a, 42a) an ihrem unteren Ende mit jeweils einer Nabe (47, 48) ausgebildet sind, in welchen die obere Verbindungsstrebe (43) verdrehbar gelagert ist.

5. Förderanlage nach Patentanspruch 4, **dadurch gekennzeichnet, dass** die unteren Tragstrebenteile (41b, 42b) unterhalb der Nabe (47, 48) an die oberen Tragstrebenteile angelenkt sind.

6. Förderanlage nach einem der Patentansprüche 1 bis 5, **dadurch gekennzeichnet, dass** die unteren Tragstrebenteile (41b, 42b) an ihren unteren Enden mit jeweils einer Nabe (49, 50) ausgebildet sind, in welchen die untere Verbindungsstrebe (44) verdrehbar gelagert ist.

7. Förderanlage nach einem der Patentansprüche 1 bis 6, **dadurch gekennzeichnet, dass** die beiden Verbindungsstreben (43, 44) anliegend an das jeweils zugeordnete Tragseil (33 bis 36) mit jeweils einer Klemme (5) zur festen Verbindung des Tragrahmens (4) mit dem jeweils zugeordneten Tragseil (33 bis 36) ausgebildet sind.

## Claims

1. A conveying installation for transporting bulk materials, having three pairs of supporting cables (31 to 36) located in each case approximately vertically one above the other and having an endless conveyor belt (1), which is movable along the supporting cables (31 to 36) from a loading station to a discharge station and in the end stations is guided over return drums, the conveyor belt (1) being configured with mutually spaced supporting beams (14) oriented transversely of the lengthwise extension of said conveyor belt, rollers (2) being mounted at the ends of said supporting beams (14) which run along the middle and lower supporting cables (33 to 36), and also having supporting frames (4) spaced from one another in the lengthwise direction of the conveying installation, said supporting frames (4) connecting together the supporting cables (31 to 36) and being formed by at least two at least approximately vertically oriented supporting struts (41, 42) and at least two at least approximately horizontally oriented upper and lower connecting struts (43, 44) and the upper ends of the supporting struts (41, 42) additionally being connected with in each case one of the two upper supporting cables (31, 32) and the connecting struts (43, 44) additionally being connected with the middle and lower supporting cables (33 to 36), **characterised in that** the supporting struts (41, 42) are formed by two supporting strut parts (41a, 41b, 42a, 42b) swivellable relative to one another about at least approximately horizontal axes (41c, 42c) oriented transversely of the supporting cables (31 to 36), the upper supporting strut parts (41a, 42a) being swivellable on the upper supporting cables (31, 32) about an at least approximately horizontal axis (41d, 42d) oriented transversely of the supporting cables (31, 32) and the lower connecting strut (44) being mounted rotatably at the lower ends of the lower supporting strut portions (41b, 42b).

2. A conveying installation according to claim 1, **characterised in that** at least one of the two connecting struts (43, 44) is mounted on the two supporting struts (41, 42) about an at least approximately horizontal axis (47, 48) oriented transversely of the supporting cables (31, 32).

3. A conveying installation according to either one of claims 1 and 2, **characterised in that**, to connect the supporting struts (41, 42) to the upper supporting cables (31, 32), a supporting bar (45, 46) is provided, on which the in each case upper end of the supporting struts (41, 42) is mounted swivellably and which is firmly connected to the associated supporting cable (31, 32), preferably by means of at least one bracket (45a, 46a).

4. A conveying installation according to any one of claims 1 to 3, **characterised in that** the upper supporting strut parts (41a, 42a) are each provided at their lower ends with a hub (47, 48), in which the upper connecting strut (43) is rotatably mounted.

5. A conveying installation according to claim 4, **characterised in that** the lower supporting strut parts (41b, 42b) are coupled to the upper supporting strut parts below the hub (47, 48).

6. A conveying installation according to any one of claims 1 to 5, **characterised in that** the lower supporting strut parts (41b, 42b) are each provided at their lower ends with a hub (49, 50), in which the lower connecting strut (44) is rotatably mounted.

7. A conveying installation according to any one of claims 1 to 6, **characterised in that** the two connecting struts (43, 44) are each constructed to rest against the respectively associated supporting cable (33 to 36) with a clamp (5) for firm connection of the supporting frame (4) to the respectively associated supporting cable (33 to 36).

## Revendications

1. Installation de transport pour le transport de produits en vrac, avec deux paires de câbles porteurs (31 à 36) qui sont placés l'un au-dessus de l'autre approximativement à la verticale, et un transporteur à bande sans fin (1) qui est apte à être déplacé d'une station de chargement jusqu'à une station de déchargement, le long des câbles porteurs (31 à 36), et qui passe, dans les stations d'extrémité, sur des tambours de renvoi, étant précisé que le transporteur à bande (1) est pourvu de poutres (14) qui sont espacées et qui s'étendent transversalement par rapport au sens longitudinal dudit transporteur à bande (1), et aux extrémités desquelles sont montés des galets (2) qui roulent le long des câbles porteurs du milieu et du bas (33 à 36), et de châssis porteurs (4) qui sont espacés dans le sens longitudinal de l'installation de transport et à l'aide desquels les câbles porteurs (31 à 36) sont reliés entre eux, étant précisé que les châssis porteurs (4) sont formés par au moins deux montants (41, 42) orientés au moins approximativement à la verticale, et par au moins deux entretoises supérieure et inférieure (43, 44) orientées au moins approximativement à l'horizontale, et que les extrémités supérieures de montants (41, 42) sont reliées chacune à l'un des deux câbles porteurs supérieurs (31, 32) tandis que les entretoises (43, 44) sont reliées aux câbles porteurs du milieu et du bas (33 à 36), **caractérisée en ce que** les montants (41, 42) sont formés par deux parties de montant (41a, 41b, 42a, 42b) aptes à pivoter l'une par rapport à l'autre sur des axes (41c, 42c) au moins approximativement horizontaux et orientés transversalement par rapport aux câbles porteurs supérieurs (31 à 36), étant précisé que les parties de montant supérieures (41a, 42a) sont aptes à pivoter au niveau des câbles porteurs supérieurs (31, 32) sur un axe (41d, 42d) au moins approximativement horizontal et orienté transversalement par rapport aux câbles porteurs (31, 32), et **en ce que** l'entretoise inférieure (44) est montée en rotation sur les extrémités inférieures des parties de montant inférieures (41b, 42b).

2. Installation de transport selon la revendication 1, **caractérisée en ce que** l'une au moins des deux entretoises (43, 44) est montée en rotation au niveau des deux montants (41, 42), sur un axe (47, 48) au moins approximativement horizontal et orienté transversalement par rapport aux câbles porteurs (31, 32).

3. Installation de transport selon l'une des revendications 1 et 2, **caractérisée en ce qu'**il est prévu pour la liaison des montants (41, 42) au niveau des câbles porteurs supérieurs (31, 32) une bande de support (45, 46) au niveau de laquelle l'extrémité supérieure des montants (41, 42) est montée pivotante et qui est reliée de manière fixe, de préférence à l'aide d'au moins une bride (45a, 46a), au câble porteur (31, 32) associé.

4. Installation de transport selon l'une des revendications 1 à 3, **caractérisée en ce que** les parties de montant supérieures (41a, 42a) sont pourvues chacune, à leur extrémité inférieure, d'un moyeu (47, 48) dans lequel l'entretoise supérieure (43) est montée en rotation.

5. Installation de transport selon la revendication 4, **caractérisée en ce que** les parties de montant inférieures (41b, 42b) sont articulées sur les parties de montant supérieures au-dessous du moyeu (47, 48).

6. Installation de transport selon l'une des revendications 1 à 5, **caractérisée en ce que** les parties de montant inférieures (41b, 42b) sont pourvues chacune, à leur extrémité inférieure, d'un moyeu (49, 50) dans lequel l'entretoise inférieure (44) est montée en rotation.

7. Installation de transport selon l'une des revendications 1 à 6, **caractérisée en ce que** les deux entretoises (43, 44), près du câble porteur (33 à 36) associé, sont pourvues chacune d'un dispositif de serrage (5) pour la liaison fixe entre le châssis porteur (4) et le câble porteur (33 à 36) associé.
